# EUROPEAN PATENT SPECIFICATION

(11) **EP 1 190 940 B1**
(45) Date of publication and mention of the grant of the patent: **12.01.2005**
(21) Application number: 01122886.3
(22) Date of filing: 24.09.2001
(51) Int. Cl.: B62D 43/04

(54) **A support device for a spare wheel of a vehicle, provided with a lever for the lateral positioning of said wheel**
Aufnahme für ein Ersatzrad, mit Hebel zur seitlichen Ausrichtung des Rades
Support pour roue de secours, avec levier pour le positionnement latéral de ladite roue

(30) Priority: 22.09.2000 IT TO000890
(43) Date of publication of application: 27.03.2002
(73) Proprietor: IVECO S.p.A., 10156 Torino (IT)
(72) Inventor: Gregori, Armando, 25043 Breno (IT)
(74) Representative: Gervasi, Gemma, Dr.

(56) References cited:
- EP-A- 0 952 070

## Description

The present invention relates to a support device for a spare wheel of a vehicle, particularly but not exclusively of a commercial vehicle.

Devices of the above-mentioned type are known, see for example document EP-A-0952070, which substantially comprise a support on which the spare wheel is secured in operation, for example by means of bolts, connecting means connecting the support to a frame of the vehicle so as to be movable between a rest position and a removal position for the withdrawal of said wheel, and releasable fastening means, generally of the screw and nut type, for fastening the support to the frame in the rest position.

The connecting means may comprise hinge-type elements for the direct connection of one end of the support to the frame, or by guide elements secured or hinged to said frame and engaged in a sliding manner by respective rollers of the support.

In the rest position of the support, the spare wheel is generally locked in a vertical direction, exerting tension on the fastening means, and in a horizontal direction causing the tyre of the wheel to abut against abutment means attached to the frame.

In the event that the spare wheel is partly or wholly deflated (punctured wheel), the locking of said wheel in the vertical direction does not pose any problem insofar as it is merely necessary to increase the tension on the releasable fastening means; on the other hand, it may happen that the partly deflated tyre does not abut satisfactorily against the associated abutment means, with the result that vibration occurs when the vehicle is motion.

The object of the present invention is to devise a support device for a spare wheel of a vehicle, which makes it possible to obviate the disadvantage associated with the above-mentioned known devices.

This object is achieved by the present invention in that it relates to a support assembly for a spare wheel of a vehicle, in particular a commercial vehicle, comprising
- a support adapted to carry said spare wheel in a releasable manner;
- connecting means connecting said support to a frame of said vehicle so as to be movable between a rest position and a removal position for the withdrawal of said spare wheel, and defining a handling path of said support arising from a combination of movements in a first direction and a second direction which are mutually transverse; and
- releasable fastening means for fastening said support to the frame in the rest position and for clamping said spare wheel substantially in said first direction between said support and said frame;
characterised by comprising lever-type means adapted to be movably connected to said frame and comprising, in turn, actuating means which are so formed that they can be engaged by a rim of said spare wheel during the displacement of said support towards said rest position so as to receive from said rim actuating forces in said first direction, and pressing means which can be actuated by said actuating means so as to press said spare wheel in said second direction into abutment with abutment means provided on said frame.

With a view to a better understanding of the present invention a preferred embodiment will be described non-restrictively by way of example below, with reference to the accompanying drawings, in which:
Figure 1 is side view of a support device for a spare wheel of a vehicle, in accordance with the present invention;
Figure 2 is a view from above, on a reduced scale, of the support device in Figure 1;
Figure 3 is a partial section, on an enlarged scale, along the line III-III in Figure 1;
Figure 4 is a side view of the support device in Figure 1, in a different operating position; and
Figure 5 is a side view, on an enlarged scale and partly in section, of a detail of the support device in Figure 1.

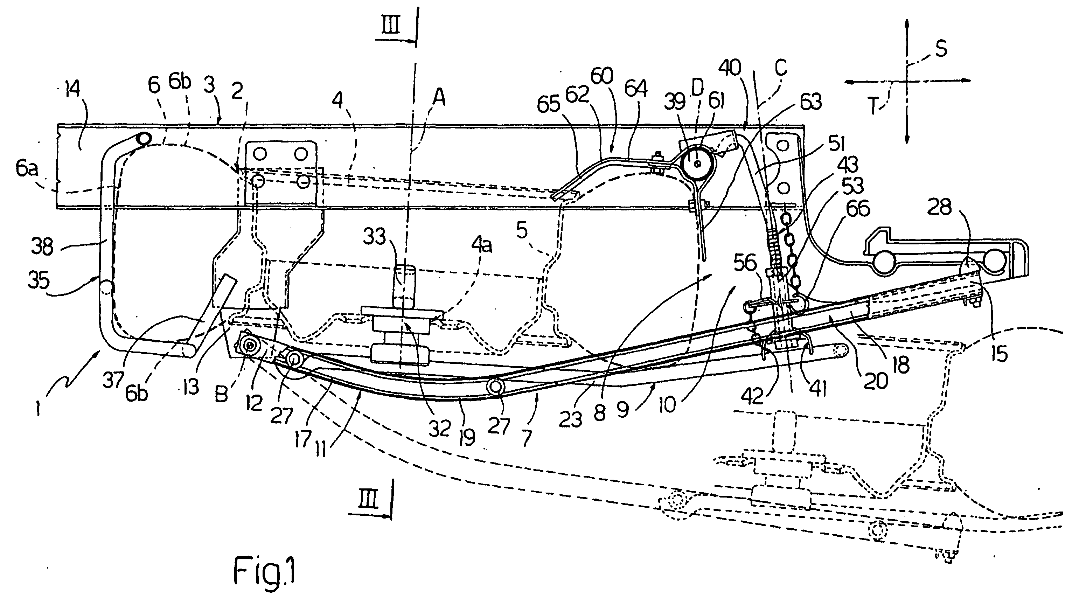

Referring now to Figures 1 to 4, the reference numeral 1 generally denotes a support device for a spare wheel 2 of a commercial vehicle, known per se and not shown as a whole, said spare wheel having an axis A. In particular, said commercial vehicle is provided with a frame 3, of which the accompanying drawings show the component parts necessary for an understanding of the present invention.

As is known, the wheel 2 comprises a rim 4, having an axis A, defining a central hole 4a adapted to be engaged by an associated wheel hub (not shown) of the vehicle, and by a tyre 6 mounted conventionally on a peripheral flange 5 of the rim 4 itself.

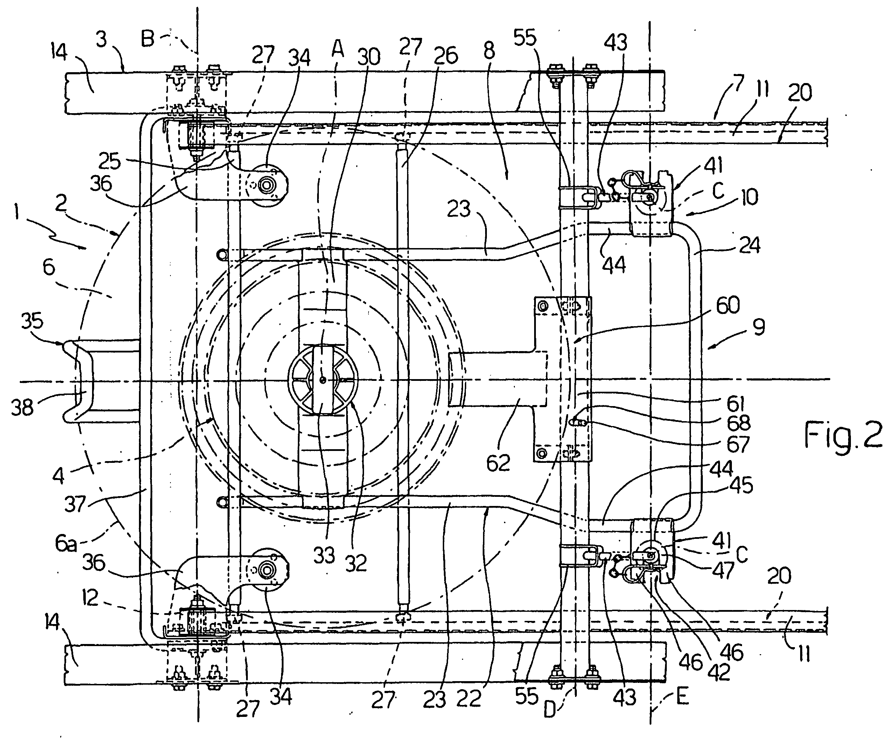

Referring now to Figures 1,2 and 4, the support device 1 essentially comprises a guide assembly 7 connected to the frame 3 so as to be able to rotate about a horizontal axis B, between a raised position and a lowered position, and defining with said frame 3 a compartment 8 for accommodating the wheel 2 situated low down with respect to the vehicle, a trolley 9 carrying the wheel 2 in a releasable manner and mounted to slide along the guide assembly 7 between a rest position inside the compartment 8 (Figures 1 and 2) and a removal position (Figure 1, dashed line), in which it is partly removed from the compartment 8 so as to allow the withdrawal of said wheel 2, and releasable fastening means 10 acting in an approximately vertical connecting direction C and in a position spaced apart from the axis B so as to fasten jointly to the frame 3 the guide assembly 7 in the raised position and the trolley 9 in the rest position. The guide assembly 7 defines a handling path of the trolley 9 between the rest and withdrawal positions resulting from a combination of movements in a vertical direction S and in a horizontal direction T; as is evident from Figures 1,4 and 5, the connecting direction C is slightly inclined relative to the vertical direction S.

In particular, the guide assembly 7 comprises a pair of guide sections 11 extending parallel to one another and each having corresponding ends 12 hinged about the axis B to respective brackets 13 projecting downwards from associated side members 14 of the frame 3. The guide sections 11 are connected to one another, with their ends 15 opposite the ends 12 in alignment, by a cross member (not shown in the accompanying drawings) and they can rotate about the axis B between the aforementioned raised and lowered positions. In particular, in the lowered position, adjacent the ground, the guide sections 11 allow the trolley 9 to slide between the rest position and the removal position.

In side view, each guide section 11 is of "skid" shape and comprises two straight portions 17,18 which between them define an obtuse angle of less than 180o and are joined by a curved connecting portion 19; in particular, the portion 17 extends from the associated hinge bracket 13 and is of shorter length than the length of the portion 18.

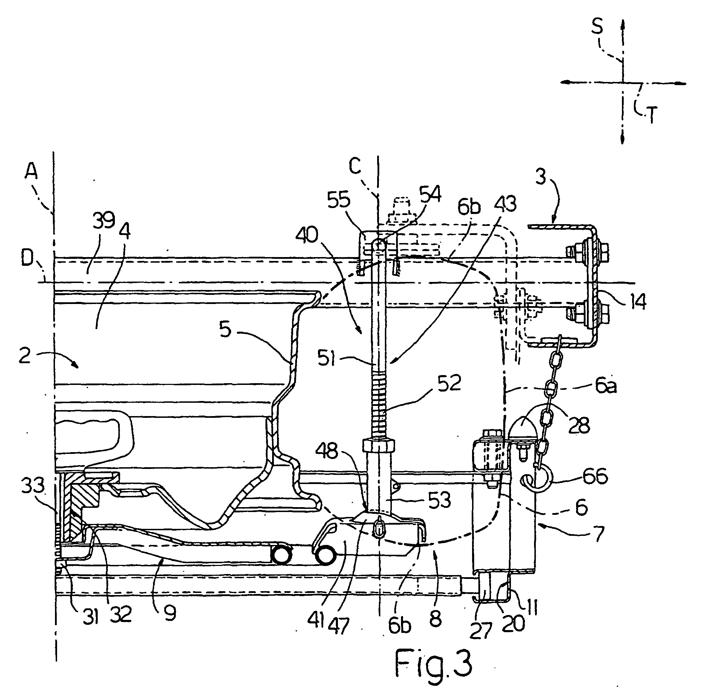

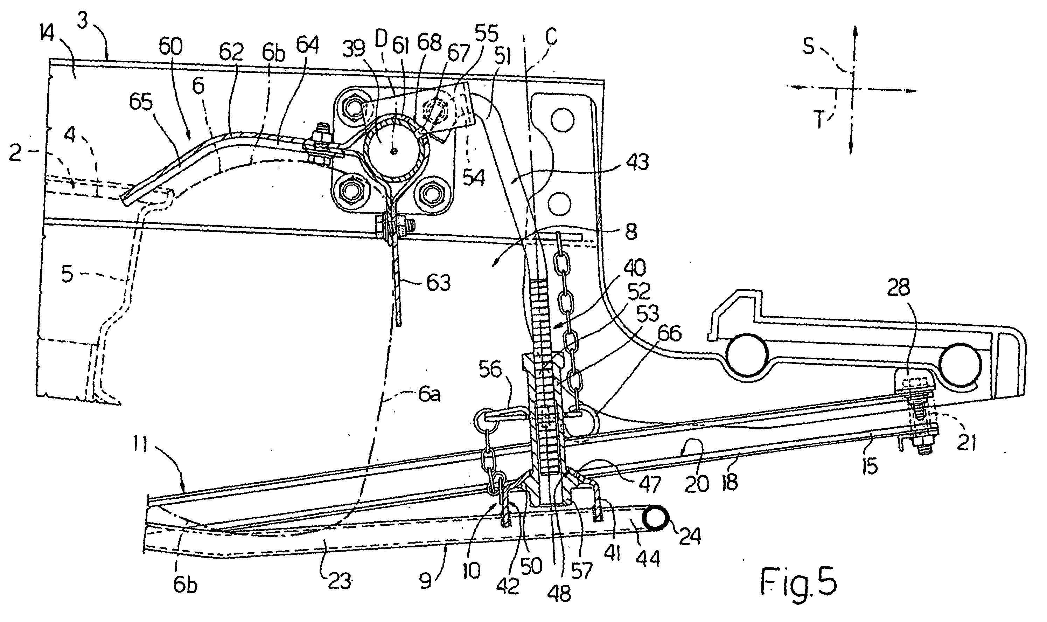

The guide sections 11 define respective longitudinal guide cavities 20 which are closed with the ends 15 in alignment by respective removable stops 21 (Figures 3 and 5) and which are of C-shaped cross-section with facing concavities. In addition, respective bumpers 28 of elastomeric material project from the ends 15 of the guide sections 11 and are adapted to co-operate by abutting against associated portions of the frame 3 in the raised position of said guide sections 11.

Referring particularly to Figure 2, the trolley 9 comprises a plurality of bars which are welded to one another so as form a substantially flat structure on which the wheel 2 can be mounted with its axis A substantially orthogonal to the plane in which said trolley 9 lies.

In particular, the trolley 9 comprises a substantially U-shaped section member 22 having a pair of arms 23 extending orthogonally from respective opposite ends of a substantially straight operating bar 24 which, in operation, is intended to define a grip or handle portion for the handling of said trolley 9. Furthermore, the trolley 9 comprises a pair of cross members 25,26 which are secured orthogonally to the arms 23, which project laterally from said arms 23 and which are provided, in alignment with portions thereof at opposite ends, with respective idle rollers 27 adapted to engage in pairs in the associated cavities 20 formed by the guide sections 11. More precisely, the cross member 25 extends in alignment with respective free ends of the arms 23, whereas the cross member 26 extends in an intermediate position between the bar 24 and said cross member 25.

Finally, the trolley 9 comprises a plate 30 of substantially quadrangular section, the opposite end edges of which are secured to the respective arms 23 and extend parallel to the cross members 25,26 and in an intermediate position between them. A nut 31 and a tubular centering peg 32 are secured to a central portion of the plate 30 and project therefrom on opposite sides, which peg can engage in the hole 4a of the rim 4 of the wheel 2. The nut 31 and the peg 32 are coaxial to one another and to a through-hole (not shown in the accompanying drawings) of the plate 30 and are adapted to be engaged, together with said through-hole, by a closing screw 33 for fastening the wheel 2 to the trolley 9.

As is evident from the accompanying drawings, the compartment 8 is bounded by the side members 14 of the frame 3, by the guide sections 11 and by a series of abutment assemblies for the wheel 2 attached to said side members 14. In particular, said abutment assemblies comprise a pair of disc-like supports 34 upwardly defining the compartment 8, and a shaped structure 35 defining the bottom of said compartment 8.

More precisely, the supports 34 are suspended from respective L-shaped supports 36 projecting orthogonally towards one another from the associated side members 14, starting from the extension zone of the brackets 13.

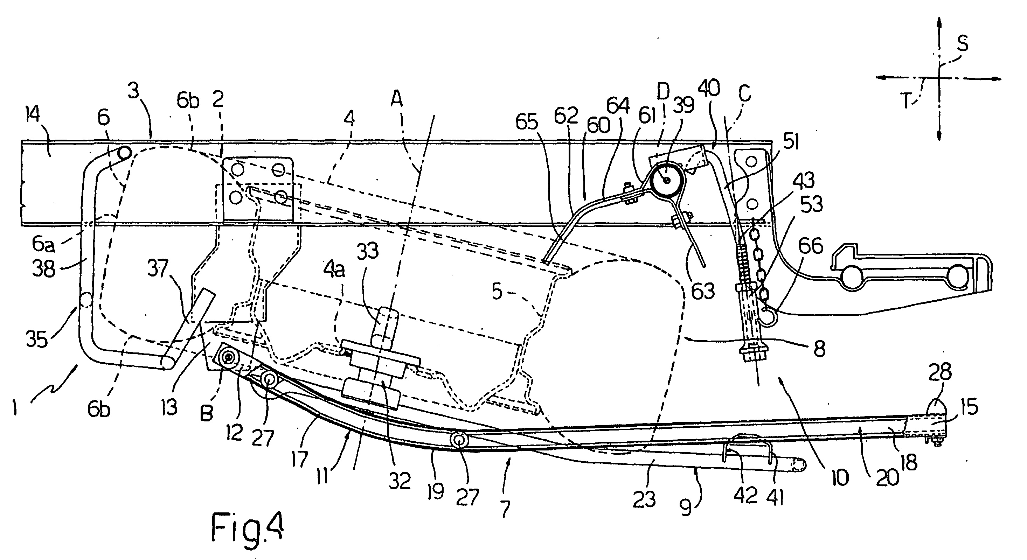

The structure 35 comprises a cross member 37 secured between respective lower end portions of the brackets 13, and an upright 38 extending upwards from a central portion of the cross member 37 and of C-shaped section in side view (Figures 1 and 4) for receiving the tread 6a of the tyre 6 of the wheel 2 and part of respective side walls 6b of said tyre 6.

With reference to the accompanying drawings, the fastening means 10 comprise two connecting assemblies 40 adapted to connect a horizontal cross member 39 extending between the side members 14, with respective arms 23 of the trolley 9 in a position adjacent to the operating bar 24; in particular, the cross member 39 has an axis D parallel to the axis A and orthogonal to the side members 14.

Each connecting assembly 40 comprises a receiving member 41 projecting from the associated arm 23 of the trolley 9 towards the adjacent guide section 11 and defining a C-shaped seating 42 with its concavity turned towards said guide section 11, and a coupling element 43 which is suspended from the cross-member 39 so as to swing in a direction E transverse to the direction C and substantially parallel to the axis D, and it can be displaced in said direction E towards and from a coupling configuration with the seating 42 of the associated receiving element 41. To enable the coupling with the associated coupling element 43 to take place, each seating 42 has its concavity facing in the direction E.

Each receiving element 41 projects from an end portion 44 of the associated arm 23 adjacent the operating bar 24 and comprises an anchoring portion 45 welded to the end portion 44 and a pair of projections 46 protruding from the anchoring portion 45 towards the adjacent guide section 11 and defining between one another and with said anchoring portion the seating 42.

Moreover, each receiving element 41 has a C-shaped raised upper edge 47 covering the outer periphery of the associated seating 42 and defining an upper opening 48 from which said seating 42 extends downwards with gradually increasing section.

Each coupling element 43 is of elongate shape and is provided, in the vicinity of the lower end thereof, with an annular enlargement 50 adapted to be inserted inside the seating 42 of the associated receiving element 41 abutting upwardly against the edge 47 so as to prevent downward movement of the trolley 9 and the guide assembly 7.

Each coupling element 43 comprises a shaped tie rod 51 having a cylindrical outer surface, which tie rod is connected in its upper region to the cross member 39 and which has in its lower region an externally threaded portion 52 and an internally threaded cylindrical sleeve 53, screwed on to the portion 52 of the tie rod 51 and integrally defining, level with its lower end, the enlargement 50.

More particularly, each tie rod 51 has an upper end portion 54 bent downwards to define an inverted U-section and engaging in a through-hole in a bracket 55 attached to the cross-member 39.

When they are coupled to the seatings 42 of the receiving elements 41, the sleeves 53 can be screwed on to the associated tie rods 51 so as to exert tension on the connecting assemblies 40 and prevent any danger of accidental uncoupling of said coupling elements 43 and said receiving elements 41. With a view to enabling the sleeves 53 to be screwed and unscrewed along the respective tie rods 51, at their lower end they terminate in respective nuts 57 which can be operated by a spanner.

Furthermore, a split pin 56 is connected by means of a chain to each receiving member 41, which split pin can be inserted through respective transverse through-holes in the associated sleeve 53 and of the associated tie rod 51 so as to provide further security in preventing uncoupling of said receiving element 41 from the respective coupling element 43. Analogously, in the raised position, each guide section 11 can be connected to the associated side member 14 by means of a safety hook 66.

With reference to Figures 1,2,4 and 5, the support device 1 further comprises a lever 60 for correctly positioning the assembly formed by the trolley 9 and by the wheel 2 inside the compartment 8.

The lever 60 is disposed upwardly with respect to the trolley 9 and in a position opposite the structure 35 defining the bottom of the compartment 8; it is hinged about the axis D of the cross member 39 and it can co-operate with the wheel 2 on the side diametrically opposite said structure 35.

The lever 60 has a hollow intermediate portion 61 engaged by the cross member 39 and positioned between the connecting assemblies 40, an operating arm 62 adapted to co-operate with the rim 4 of the wheel 2 so as to receive therefrom, in the stage in which the trolley 9 is being raised so as to connect it to the cross member 39 by means of the connecting assemblies 40, thrust forces tending to rotate said operating arm 62 about the axis D and a pressing arm 63 adapted to co-operate with the tread 6a of the tyre 6 so as to press the wheel 2 into abutment with the structure 35 under the action of the rotation of the operating arm 62.

In particular, the operating and pressing arms 62,63 project from the intermediate portion 61 substantially in directions orthogonal to one another.

The operating arm 62 comprises a shaped plate which has a flat first portion 64 adjacent the intermediate portion 61 and adapted to form an upper abutment for the side wall 6b of the tyre 6 of the wheel 2 opposite that arranged in contact with the trolley 9, and a second portion 65 which is also flat and bent towards the trolley 9, i.e. downwards with respect to the portion 64, and which is adapted to co-operate with the rim 4 of the wheel 2 in the vicinity of the flange 5.

However, the pressing arm 63 comprises a flat plate substantially orthogonal to the portion 64 of the operating arm 62 and extending downwards from the intermediate portion 61 with respect to the overall extension of the operating arm 62 from said intermediate portion 61.

In the absence of load, i.e. interaction with the wheel 2, the lever 60 is arranged under the action of its own weight, which is greater along the operating arm 62, in a first operating position (Figure 4) in which said operating arm 62 is oblique with respect to the vertical direction S and extending downwards from the intermediate portion 61. In this position the rim 4 of the wheel 2 can be engaged more easily by the portion 65 of the operating arm 62 when the trolley 9 is being displaced from the removal position into the rest position.

As a result of the interaction with the wheel 2, the lever 60 reaches a second operating position (Figures 1,2 and 5), in which the operating arm 62 extends substantially in the horizontal direction T and the pressing arm 63 extends substantially in the vertical direction S.

Preferably, said operating positions of the lever 60 are defined by the abutment of a pin 67 attached to the cross member 39 with respective opposite end edges of a slot 68 provided in the intermediate portion 61 of said lever 60.

The mode of operation of the support device 1 will be described below starting from the rest configuration illustrated in Figures 1 and 2, in which said device maintains the wheel 2 suspended from the vehicle frame 3.

In said configuration, the guide sections 11 are arranged in the raised position and they are connected by means of the safety hooks 66 to the respective side members 14, whereas the trolley 9 is arranged in the rest position on the guide sections 11 and it is fastened to the cross member 39 of the frame 3 by means of the connecting assemblies 40. The wheel 2, which is concealed in the compartment 8, is clamped substantially in the vertical direction S between the supports 34 and the operating arm 62 of the lever 60 on the one hand, and the guide sections 11 and the trolley 9 on the other hand. Moreover, the wheel 2 is locked laterally between the lever 60 and the structure 35 of the frame 3.

The removal of the spare wheel 2 takes place as follows.

Firstly, the safety hooks 66 are uncoupled from the respective guide sections 11 and the split pins 56 are withdrawn from the respective coupling elements 43.

At this point, by applying a spanner to the nuts 57 the sleeves 53 are partially unscrewed along the respective tie rods 51 so as to achieve partial lowering of the assembly formed by the trolley 9, by the wheel 2 and by the guide sections 11, and slackening the tension on the connecting assemblies 40.

The completion of the lowering of the guide sections 11 and of the trolley 9 is effected by gravity, the coupling elements 43 being disengaged from the associated receiving elements 41. In particular, by moving the coupling elements 43 in opposite directions in the direction E there is effected lateral disengagement of the enlarged portions 50 of the sleeves 53 from the associated C-shaped seatings 42 of the receiving elements 41. To prevent sudden lowering of the trolley 9 and of the guide sections 11 as a result of the considerable weight of the wheel 2, the trolley 9 has to be accompanied during its displacement by holding it with the operating bar 24.

The guide sections 11 can then rotate about the axis B until reaching the lowered position and the trolley 9 can slide along said sections 11 from the rest position into the removal position (Figure 1, dashed line), in which it is partly removed from the compartment 8 and it projects outwardly with the respect to the vehicle so as to allow the wheel 2 to be withdrawn. In this position, the wheel 2 can be freed from the trolley 9 by acting on the screw 33 or the trolley 9 and the wheel 2 can be uncoupled from the guide sections 11 by removing the end stops 21.

The mounting of the trolley 9 on the vehicle takes place substantially by repeating the above-described sequence of operations in reverse order.

In particular, the trolley 9 provided with a replacement wheel or with the spare wheel 2 is caused to slide on the guide sections 11 from the removal position towards the rest and raised position, holding it with the operating bar 24, towards the side members 14.

As a result of the C-configuration of the guide cavities 20 in which the rollers 27 of the trolley 9 are engaged, the raising of the trolley necessarily brings about the rotation of the guide sections 11 towards the raised position.

When the receiving elements 41 are aligned horizontally with the enlargements 50 of the respective coupling elements 43, the latter are displaced in opposite directions in the direction E until reaching the coupling configuration with said receiving elements 41. More precisely, the enlargement 50 of each coupling element 43 is inserted in the direction E into the seating 42 of the associated receiving element 41 abutting upwardly against the edge 47.

At this stage, the rim 4 of the wheel 2 upwardly comes into contact with the free end of the operating arm 62 of the lever 60 causing it to rotate about the axis D in a clockwise direction with reference to the accompanying drawings. In particular, the operating arm 62 receives from the rim 4 an actuating force in the vertical direction S. The rotation of the operating arm 62 brings about a corresponding angular displacement about the axis D of the pressing arm 63 which interacts with the tread 6a of the wheel 2 by pressing said wheel 2 in the horizontal direction T into abutment with the opposing structure 35.

At this point tension is exerted on the connecting assemblies 40 by screwing the sleeves 53 on to the respective tie rods 51 by means of a spanner. The mounting operation is then completed by securing the guide sections 11 to the side members 14 of the frame 3 by means of the safety hooks 66 and by inserting the split pins 56 through the respective coupling elements 43.

The advantages achieved with the present invention are apparent from a study of the features of the support device 1 designed in accordance with therewith.

In particular, the arrangement of the lever 60, which is actuated by the raising of the rim 4 of the wheel 2, ensures the correct positioning and locking of said wheel 2 in the horizontal direction T against the abutment structure 35, whatever the state of inflation of the tyre 6. It is evident that the support device 1 can be subject to modifications and variants which do not depart from the scope of protection defined by the claims.

## Claims

1. A support device (1) for a spare wheel (2) of a vehicle, in particular a commercial vehicle, comprising:
- a support (9) adapted to carry said spare wheel (2) in a releasable manner;
- connecting means (7) connecting said support (9) to a frame (3) of said vehicle so as to be movable between a rest position and a removal position for the withdrawal of said spare wheel (2), and defining a handling path of said support (9) arising from a combination of movements in a first direction and a second direction (S,T) which are mutually transverse; and
- releasable fastening means (10) for fastening said support (9) to the frame (3) in the rest position and for clamping said spare wheel (2) substantially in said first direction (S) between said support (9) and said frame (3);
**characterised by** comprising lever-type means (60) adapted to be movably connected to said frame (3) and comprising, in turn, actuating means (62) which are so formed that they can be engaged by a rim (4) of said spare wheel (2) during the displacement of said support (9) towards said rest position so as to receive from said rim (4) actuating forces in said first direction (S), and pressing means (63) which can be actuated by said actuating means (62) so as to press said spare wheel (2) in said second direction (T) into abutment with abutment means (35) provided on said frame (3).

2. A device according to claim 1, **characterised in that** said first direction (S) is a substantially vertical direction and said second direction (T) is a substantially horizontal direction, said support (9) having a bearing portion (22,30) of substantially flat design, which is transverse to said first direction (S) and to the axis (A) of said spare wheel (2).

3. A device according to claim 2, **characterised in that** said lever means (60) are connected to said frame (3) upwardly with respect to said support (9) and in a position substantially opposite said abutment means (35).

4. A device according to claim 3, **characterised in that** said lever means comprise a lever (60) having an intermediate portion (61) hinged to said frame (3), a first arm (62) projecting from said intermediate portion (61) and defining said actuating means, and a second arm (63) which also projects from said intermediate portion (61), which is angularly spaced apart from said first arm (62) and defining said pressing means.

5. A device according to claim 4, **characterised in that** said first and second arms (62,63) project from said intermediate portion (61) substantially in directions which are orthogonal to one another.

6. A device according to claim 4 or 5, **characterised in that** said first arm (62) has an end portion (65) bent towards said support (9) so as to facilitate the engagement of said rim (4) of said spare wheel (2).

7. A device according to claim 5 or 6, **characterised in that**, in the absence of load, said lever (60) is arranged in a first operating position in which said first arm (62) is oblique with respect to said first direction (S) and extending from said intermediate portion (61) towards said support (9), and it can be moved, as a result of the interaction with said spare wheel (2), towards a second operative position in which said first arm (62) extends substantially in said second direction (T) and said second arm (63) extends substantially in said first direction (S) in abutment with a tyre (6) of said spare wheel (2) on the side diametrically opposite said abutment means (35).

8. A device according to claim 7, **characterised by** comprising a slot (68) and a pin (67) which are movably joined together and provided on a hinge pivot (39) of said lever (60) and on said intermediate portion (61) of said lever (60), said first and second operating positions of said lever (60) being defined by the abutment of said pin (67) against opposite end edges of said slot (68).

9. A device according to any one of the preceding claims, **characterised in that** said connecting means comprise guide means (7) adapted to be hinged to said frame (3) of said vehicle and rotatable with respect to said frame (3) between a raised position and a lowered position, said support comprising a trolley (9) movable along said guide means (7) between said rest and removal positions.

## Patentansprüche

1. Aufnahme (1) für ein Ersatzrad (2) eines Fahrzeugs, insbesondere eines Nutzfahrzeugs, umfassend:
- eine Auflage (9), die darauf ausgelegt ist, das genannte Ersatzrad (2) zu tragen, so dass es abnehmbar ist;
- ein Verbindungsmittel (7), das die genannte Auflage (9) mit einem Rahmen (3) des genannten Fahrzeugs so verbindet, dass sie zwischen einer Ruheposition und einer Abnehmposition zum Herausnehmen des genannten Ersatzrads (2) bewegt werden kann, und das einen Weg zur Handhabung der genannten Auflage (9) definiert, der sich aus einer Kombination von Bewegungen in einer ersten Richtung und einer zweiten Richtung (S, T) ergibt, die quer zueinander stehen; und
- ein lösbares Befestigungsmittel (10), um die genannte Auflage (9) am Rahmen (3) in der Ruheposition zu befestigen und um das genannte Ersatzrad (2) im Wesentlichen in der genannten ersten Richtung (S) zwischen der genannten Auflage (9) und dem genannten Rahmen (3) festzuklemmen;
**dadurch gekennzeichnet, dass** sie ein hebelartiges Mittel (60) umfasst, das darauf ausgelegt ist, beweglich mit dem genannten Rahmen (3) verbunden zu werden, und das seinerseits umfasst: ein Betätigungsmittel (62), das so ausgebildet ist, dass es in einer Felge (4) des genannten Ersatzrads (2) zum Eingriff gebracht werden kann, während die genannte Auflage (9) zur genannten Ruheposition verschoben wird, so dass es die zur Betätigung aufgewendeten Kräfte in der genannten ersten Richtung (S) von der genannten Felge (4) aufnimmt, und ein Drückmittel (63), das mittels des genannten Betätigungsmittels (62) betätigt werden kann, so dass das genannte Ersatzrad (2) in die genannte zweite Richtung (T) bis zum Anstoßen an ein am genannten Rahmen (3) vorhandenes Anschlagmittel (35) gedrückt wird.

2. Vorrichtung gemäß Anspruch 1, **dadurch gekennzeichnet, dass** die genannte erste Richtung (S) eine im Wesentlichen vertikale Richtung ist und die genannte zweite Richtung (T) eine im Wesentlichen horizontale Richtung ist, wobei die genannte Auflage (9) einen tragenden Abschnitt (22, 30) von weitgehend flacher Form aufweist, der quer zur genannten ersten Richtung (S) und zur Achse (A) des genannten Ersatzrads (2) steht.

3. Vorrichtung gemäß Anspruch 2, **dadurch gekennzeichnet, dass** das genannte Hebelmittel (60) oberhalb der genannten Auflage (9) mit dem genannten Rahmen (3) verbunden ist und in einer Lage angeordnet ist, die dem genannten Anschlagmittel (35) im Wesentlichen gegenüber liegt.

4. Vorrichtung gemäß Anspruch 3, **dadurch gekennzeichnet, dass** das genannte Hebelmittel einen Hebel (60) umfasst, der einen mittleren Abschnitt (61) aufweist, der an dem genannten Rahmen (3) drehbar gelagert ist, sowie einen ersten Arm (62), der von dem genannten mittleren Abschnitt (61) her hervorsteht und das genannte Betätigungsmittel darstellt, und einen zweiten Arm (63), der ebenfalls von dem mittleren Abschnitt (61) her hervorsteht, unter einem Winkel zu dem genannten ersten Arm (62) steht und das genannte Druckmittel darstellt.

5. Vorrichtung gemäß Anspruch 4, **dadurch gekennzeichnet, dass** der genannte erste Arm (62) und der genannte zweite Arm (63) von dem genannten mittleren Abschnitt (61) her im Wesentlichen in Richtungen hervorstehen, die senkrecht aufeinander stehen.

6. Vorrichtung gemäß Anspruch 4 oder 5, **dadurch gekennzeichnet, dass** der genannte erste Arm (62) einen Endabschnitt (65) aufweist, der zu der genannten Auflage (9) hin gebogen ist, um das Eingreifen der genannten Felge (4) des genannten Ersatzrads (2) zu erleichtern.

7. Vorrichtung gemäß Anspruch 5 oder 6, **dadurch gekennzeichnet, dass** sich der genannte Hebel (60), während keine Belastung vorliegt, in einer ersten Betriebsposition befindet, in der der genannte erste Arm (62) schief bezüglich der genannten ersten Richtung (S) steht und sich von dem genannten mittleren Abschnitt (61) aus zu der genannten Auflage (9) hin erstreckt, und er lässt sich infolge einer wechselseitigen Einwirkung mit dem genannten Ersatzrad (2) in eine zweite Betriebsposition bewegen, in der sich der genannte erste Arm (62) im Wesentlichen in die genannte zweite Richtung (T) erstreckt und sich der genannte zweite Arm (63) im Wesentlichen in die genannte erste Richtung (S) erstreckt und dabei auf der Seite, die dem genannten Anschlagmittel (35) diametral gegenüber liegt, an einen Reifen (6) des genannten Ersatzrads (2) anstößt.

8. Vorrichtung gemäß Anspruch 7, **dadurch gekennzeichnet, dass** sie ein Langloch (68) und einen Stift (67) aufweist, die beweglich miteinander verbunden sind und sich auf einem Drehzapfen (39) des genannten Hebels (60) und auf dem genannten mittleren Abschnitt (61) des genannten Hebels (60) befinden, wobei die genannte erste Betriebsposition und die genannte zweite Betriebsposition des genannten Hebels (60) durch das Anstoßen des genannten Stifts (67) an die beiden einander gegenüber liegenden Enden des genannten Schlitzlochs (68) definiert sind.

9. Vorrichtung gemäß einem der vorstehenden Ansprüche, **dadurch gekennzeichnet, dass** das genannte Verbindungsmittel ein Führungsmittel (7) umfasst, das daraufhin ausgelegt ist, schwenkbar mit dem genannten Rahmen (3) des genannten Fahrzeugs verbunden zu werden und das zwischen einer angehobenen Position und einer abgesenkten Position drehbar bezüglich des genannten Rahmens (3) gelagert ist, wobei die genannte Auflage einen Wagen (9) umfasst, der längs des genannten Führungsmittels (7) zwischen der genannten Ruheposition und der genannten Abnehmposition beweglich ist.

## Revendications

1. Dispositif de support (1) pour une roue de secours (2) d'un véhicule, en particulier d'un véhicule utilitaire, comprenant:
- un support (9) apte à supporter ladite roue de secours (2) d'une manière relâchable;
- un moyen de connexion (7) reliant ledit support (9) à un châssis (3) dudit véhicule de manière à être déplaçable entre une position de repos et une position de retrait pour l'enlèvement de ladite roue de secours (2), et définissant un chemin de manipulation dudit support (9) résultant d'une combinaison de mouvements dans une première direction et dans une seconde direction (S, T) qui sont mutuellement transversales; et
- un moyen de fixation relâchable (10) pour fixer ledit support (9) au châssis (3) dans la position de repos et pour serrer ladite roue de secours (2) sensiblement dans ladite première direction (S) entre ledit support (9) et ledit châssis (3);
**caractérisé en ce qu'**il comporte un moyen de type à levier (60) apte à être relié de manière mobile audit châssis (3) et comprenant, à son tour, des moyens d'actionnement (62) qui sont formés de façon qu'ils puissent être mis en prise avec un rebord (4) de ladite roue de secours (2) pendant le déplacement dudit support (9) vers ladite position de repos afin de recevoir dudit bord (4) des forces d'actionnement dans ladite première direction (S), et des moyens de pression (63) qui peuvent être actionnés par lesdits moyens d'actionnement (62) de manière à pousser ladite roue de secours (2) dans ladite seconde direction (T) en butée contre des moyens de butée (35) réalisés sur ledit châssis (3).

2. Dispositif selon la revendication 1, **caractérisé en ce que** ladite première direction (S) est une direction sensiblement verticale, et ladite seconde direction (T) est une direction sensiblement horizontale, ledit support (9) comportant une portion de support (22, 30) d'une conception sensiblement plate qui est transversale à ladite première direction (S) et à l'axe (A) de ladite roue de secours (2).

3. Dispositif selon la revendication 2, **caractérisé en ce que** lesdits moyens formant levier (60) sont reliés audit châssis (3) vers le haut par rapport audit support (9) et dans une position sensiblement opposée auxdits moyens de butée (35).

4. Dispositif selon la revendication 3, **caractérisé en ce que** lesdits moyens formant levier comprennent un levier (60) comportant une portion intermédiaire (61) articulée audit châssis (3), un premier bras (62) faisant saillie de ladite portion intermédiaire (61) et définissant ledit moyen d'actionnement et un second bras (63) qui fait également saillie de ladite portion intermédiaire (61), qui est angulairement espacée dudit premier bras (62) et définissant ledit moyen de pression.

5. Dispositif selon la revendication 4, **caractérisé en ce que** lesdits premier et second bras (62, 63) font saillie de ladite portion intermédiaire (61) sensiblement dans des directions qui sont orthogonales l'une à l'autre.

6. Dispositif selon la revendication 4 ou 5, **caractérisé en ce que** ledit premier bras (62) présente une portion d'extrémité (65) courbée vers ledit support (9) de manière à faciliter la mise en prise dudit rebord (4) de ladite roue de secours (2).

7. Dispositif selon la revendication 5 ou 6, **caractérisé en ce que**, en l'absence d'une charge, ledit levier (60) est agencé dans une première position fonctionnelle dans laquelle ledit premier bras (62) est incliné par rapport à ladite première direction (S) et s'étendant de ladite portion intermédiaire (61) vers ledit support (9), et il peut être déplacé, par suite de l'interaction avec ladite roue de secours (2), vers une deuxième position fonctionnelle dans laquelle ledit premier bras (62) s'étend sensiblement dans ladite seconde direction (T) et ledit second bras (63) s'étend sensiblement dans ladite première direction (S) en butée contre un bandage (6) de ladite roue de secours (2) sur le côté diamétralement opposé auxdits moyens de butée (35).

8. Dispositif selon la revendication 7, **caractérisé en ce qu'**il comprend une fente (68) et un axe (67) qui sont assemblés de manière mobile et sont réalisés sur un pivot (39) dudit levier (60) et sur ladite portion intermédiaire (61) dudit levier (60), lesdites première et seconde positions fonctionnelles dudit levier (60) étant définies par la butée dudit axe (67) contre des bords d'extrémité opposés de ladite fente (68).

9. Dispositif selon l'une des revendications précédentes, **caractérisé en ce que** lesdits moyens de connexion comprennent des moyens de guidage (7) aptes à être articulés audit châssis (3) dudit véhicule et pouvant tourner par rapport audit châssis (3) entre une position relevée et une position abaissée, ledit support comprenant un chariot (9) déplaçable le long dudit moyen de guidage (7) entre lesdites positions de repos et d'enlèvement.
